# EUROPÄISCHE PATENTSCHRIFT

(11) **EP 0 428 978 B1**
(45) Veröffentlichungstag und Bekanntmachung des Hinweises auf die Patenterteilung: **12.05.1993**
(21) Anmeldenummer: 90121674.7
(22) Anmeldetag: 13.11.1990
(51) Int. Cl.: A23N 17/00, A23P 1/14, B30B 11/24

(54) **Vorrichtung zum Auspressen von Bearbeitungsgut**
Extruding apparatus
Dispositif d'extrusion

(30) Priorität: 21.11.1989 CH 4172/89
(43) Veröffentlichungstag der Anmeldung: 29.05.1991
(73) Patentinhaber: BÜHLER AG, 9240 Uzwil (CH)
(72) Erfinder: Froidevaux, Pierre-Alain, CH-9303 Wittenbach (CH); Haelg, Werner, CH-9242 Oberuzwil (CH)
(74) Vertreter: Révy von Belvárd, Peter

(56) Entgegenhaltungen:
- EP-A- 0 143 335
- EP-A- 0 331 207
- CH-A- 460 327
- DD-A- 267 377
- DE-B- 1 122 462
- FR-A- 946 408
- GB-A- 1 493 559
- GB-A- 2 053 788
- SU-A- 1 348 206
- US-A- 2 120 138
- US-A- 2 401 236
- US-A- 3 070 096
- US-A- 3 255 220
- US-A- 4 187 727

## Beschreibung

Die Erfindung bezieht sich auf eine Vorrichtung nach dem Oberbegriff des Anspruches 1.

Eine derartige Vorrichtung ist aus der GB-A-2 053 788 bekannt.

Der Erfindung liegt die Aufgabe zugrunde, eine gattungsgemässe Vorrichtung derart auszubilden, dass das aus der Austrittsöffnung austretende Form produkt verbessert wird. Diese Aufgabe wird erfindungsgemäss durch die kennzeichnenden Merkmale des Anspruches 1 gelöst.

Die Zähne des Gegendruckgliedes können gewünschtenfalls weggelassen werden, so dass die Vorrichtung in ihrer Anwendung vielseitiger ist. Anderseits ist es aber auch leicht, abgenutzte Zähne auszutauschen, ohne deshalb des gesamte Gegendruckglied, das einen beträchtlichen Durchmesser aufweisen kann, ersetzen zu müssen. Durch die Anordnung eines Messers wird - bei Erzeugung von Formlingen - vermieden, dass das Material in langen Strängen derart austritt, dass diese Stränge in unregelmässiger Form abbrechen und dabei die an sich gegebene Form wieder verlieren. Die aus den Austrittskanälen einer erfindungsgemässen Vorrichtung austretenden Formlinge weisen überraschend eine hohe Dichte bei sehr grosser Formstabilität auf.

Durch das Vorsehen einer in ihrer Grösse vorgegebenen Kraft auf das Gegendruckglied gemäss Anspruch 1 wird nicht nur das austretende Formprodukt verbessert, sondern es ist auch das Betriebsverhalten der Vorrichtung beim Anfahren günstiger, da sich beim Aufbau des Materialdruckes der Gegendruck nicht ständig vergrössert, sondern begrenzt ist. Dabei ist es vorteilhaft, für die Kraft eine Einstellvorrichtung vorzusehen, um den Gegendruck beim Anfahren der Vorrichtung geringer einzustellen als später. Insbesondere ist auch hervorzuheben, dass mit der erfindungsgemässen Vorrichtung die Durchsatzleistung der Vorrichtung leicht den Gegebenheiten anpassbar ist, ohne dass sich die Druckverhältnisse verändern.

Es ist vorteilhaft, zur Verminderung der Kantenausbruchsgefahr die Ecken der Austrittskanäle zu runden. Auch ist eine Druckerhöhung durch Änderung des Durchtrittsquerschnitts der Austrittskanäle zweckmässig, wozu der Eingang eines Austrittskanals durch in der Seitenwandung angeordnete taschenartige Vertiefung erweitert ist.

Weitere Merkmale der Erfindung ergeben sich aus den weiteren Ansprüchen, der Beschreibung und der Zeichnung, in der nachfolgend im einzelnen beschriebene Ausführungsbeispiele der erfindungsgemässen Vorrichtung dargestellt sind. Es zeigen:
- Fig. 1: eine schematische Darstellung einer erfindungsgemässen Vorrichtung zum Bilden von Formlingen,
- Fig. 2: eine vergrösserte Darstellung des Details II in Fig. 1 im Teilschnitt,
- Fig. 3: eine vergrösserte Darstellung eines Schnittes durch eine mit Zähnen versehene Ringaustrittsöffnung,
- Fig. 4: einen Schnitt längs der Linie IV-IV in Fig. 2,
- Fig. 5: einen Schnitt längs der Linie V-V in Fig. 1,
- Fig. 6: eine Draufsicht auf eine mit Zähnen versehene Ringaustrittsöffnung in Richtung des Pfeiles VI in Fig. 3 in abgeänderter Ausführung,
- Fig. 7: einen Schnitt längs der Linie VII-VII in Fig. 6.

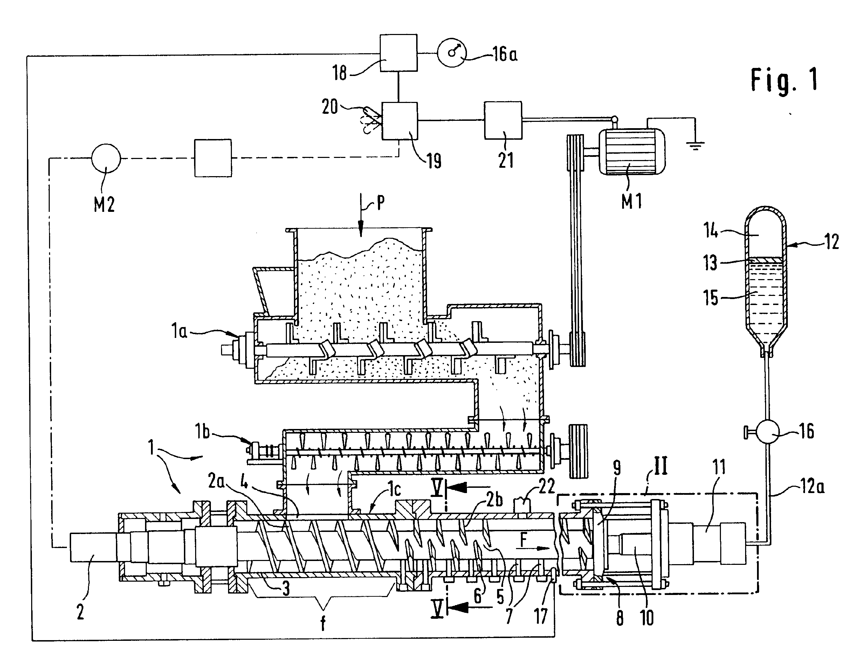

Die Vorrichtung 1 nach Fig. 1 ist zur Verkürzung der Achslänge "gefaltet", d.h. in mehrere nebeneinander liegende axiale Gehäuseabschnitte unterteilt; prinzipiell ist auch die Anordnung auf einer Achse mit nur einer Schneckenwelle möglich. Aufgrund der Unterteilung in axiale Gehäuseabschnitte kann vorteilhaft jede in einem Gehäuseabschnitt angeordnete Schneckenwelle mit individueller Geschwindigkeit angetrieben werden. Der erste Gehäuseabschnitt 1a hat die Funktion des Dosierers und Mischers; ihm wird in Pfeilrichtung P das Bearbeitungsgut zugeführt. In dem zweiten Gehäuseabschnitt 1b erfolgt die weitere Durchmischung, ggf. unter Zufuhr von Dampf und/oder Flüssigkeiten. Im letzten Gehäuseabschnitt läuft eine Schneckenwelle 2, die im Bereich einer Einlassöffnung 4 in einem Förderabschnitt f als Förderschnecke 2a ausgebildet ist und in dem in Förderrichtung F anschliessenden Abschnitt 2b mit Knetwerkzeugen 6 versehen ist. Die Knetwerkzeuge 6 sind aus über einen Teil des Umfanges der Schneckenwelle 2 verlaufenden Schneckenabschnitten gebildet, zwischen denen Oeffnungen 5 frei bleiben.

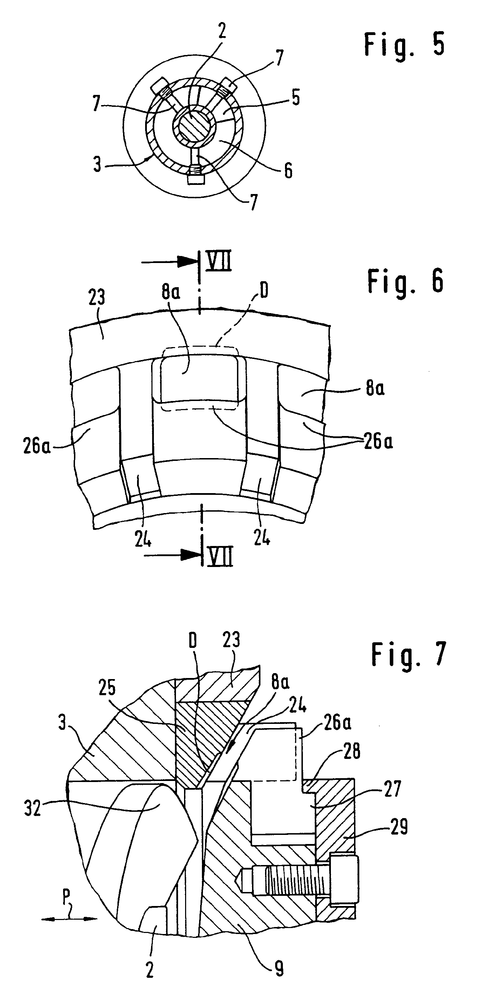

Mit den Knetwerkzeugen 6 der Schneckenwelle 2 arbeiten gehäusefeste Knetwerkzeuge 7 (Fig. 1, 5) zusammen. Das im Gehäuse 3 des Gehäuseabschnittes 1c vorgeschobene Material weicht den als Stifte 7 ausgebildeten Knetwerkzeugen über die Oeffnungen 5 aus, weshalb eine gute Durchmischung erzielt ist. Auch andere Knetwerkzeuge wie exzentrische Scheiben od.dgl. können als Knetwerkzeug zweckmässig sein.

Nachdem das Bearbeitungsgut, z.B. eine Tierfuttermischung oder Sojabohnenmaterial, von den Knetwerkzeugen 6 und 7 innig durchknetet wurde, gelangt es zu einer Austrittsöffnung 8 an der Gehäusestirnseite. Die Austrittsöffnung 8 ist durch das stirnseitige Ende des Gehäuses 3 und ein axiales, etwa konisches Gegendruckglied 9 begrenzt. Im Gehäuse 3 können im Knetabschnitt eine oder mehrere Dampfeinlassöffnungen 22 vorgesehen sein, oder es kann Dampf über eine hohle Schneckenwelle eingebracht werden.

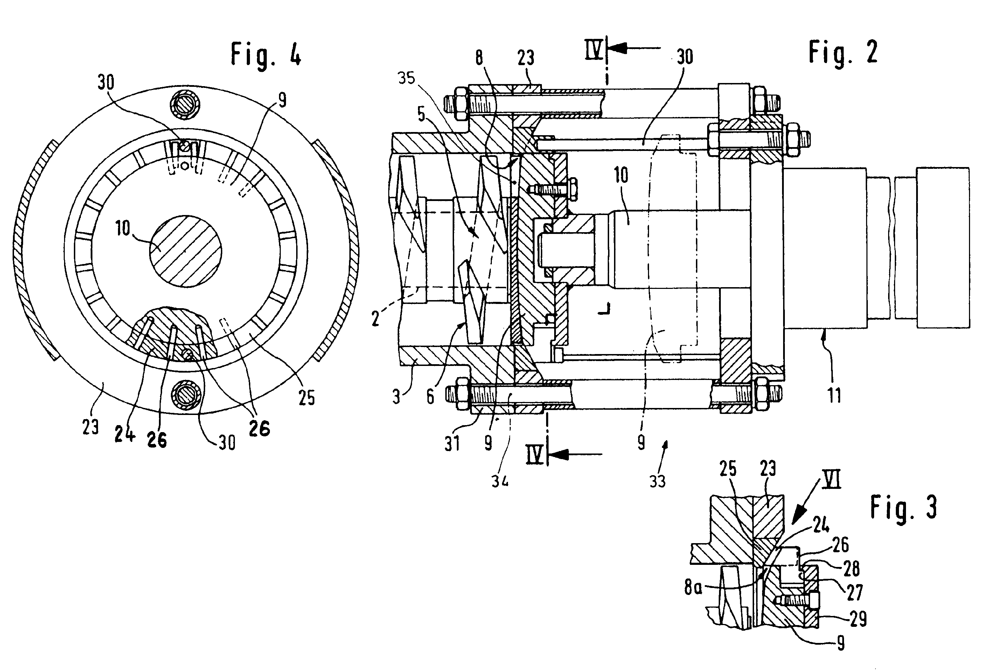

Wie insbesondere Fig. 2 zeigt, ist das Gegendruckglied 9 mit dem freien Ende einer Kolbenstange 10 einer Kolben/Zylindereinheit 11 verbunden. Wie aus Fig. 1 zu ersehen, ist die Kolben/Zylindereinheit 11 an einen Druckspeicher 12 angeschlossen, über den der Arbeitsraum der Kolben/Zylindereinheit mit einer gleichmässigen Kraft beaufschlagt ist, die über die Kolbenstange 10 auf das Gegendruckglied 9 wirkt. Der Druckspeicher 12 besteht in bekannter Weise aus einem auf eine Membran oder einen Kolben 13 wirkenden Gasvolumen 14, dessen Druck eine hydraulische Flüssigkeit 15 belastet. Der Druck steht über die Anschlussleitung 12a im Arbeitsraum der Kolben/Zylindereinheit 11 an. In der Anschlussleitung 12a ist ein einstellbares Reduzierventil 16 angeordnet, sodass die auf das Gegendruckglied 9 wirkende Kraft einstellbar ist. Zweckmässig ist diese Anordnung als lösbare Einheit 33 mit Hilfe von Schrauben 34 an einem Gehäuseflansch 31 angeschlossen.

Dem Druck des über die Förderschnecke 2a in Richtung F geförderten Bearbeitungsgutes wirkt nun so ein gleich hoher (konstanter) einstellbarer Gegendruck entgegen. Der Gegendruck kann so an die verschiedenen zu verarbeitenden Materialien oder Mischungen und auch an unterschiedliche Betriebsbedingungen der Vorrichtung 1, wie z.B. abweichende Durchsatzleistungen, Start- oder Vollastbetrieb, angepasst werden.

Die Schneckenwellen der Gehäuseabschnitte 1a bis 1c der Vorrichtung 1 können ungeregelt laufen. Treten dabei aber Drehgeschwindigkeitsschwankungen der Wellen auf und/oder Schwankungen der zugeführten Bearbeitungsmenge, so wächst der Materialdruck im Gehäuse 3 an, weshalb sich die Austrittsöffnung 8 entsprechend vergrössern wird, um den Materialdruck abzubauen. Das austretende Produkt wird also schwankenden Querschnitt aufweisen. Um an der Austrittsöffnung 8 Formlinge besonders gleichmässigen Querschnitts zu erhalten, ist ein Regelkreis zweckmässig. Hierzu ist vorgesehen, vor der Austrittsöffnung 8 des Gehäuses 3 einen Druckfühler 17 anzuordnen, dessen Ausgangssignal in einem Regelkreis 18 ausgewertet wird. Dem Regelkreis 18 ist über einen Sollwertgeber 16a ein Sollwert vorgegeben, nach dem der Druck im Gehäuse 3 geführt ist. Das den Gegendruck in der Kolbenzylindereinheit 11 einstellende Ventil 16 ist vorteilhaft mit dem Sollwertgeber 16a in der Weise verbunden, dass ggf. übereinstimmende Druckwerte erzielt sind.

Vorteilhaft ist am Ausgang des Regelkreises 18 eine Wählstufe 19 vorgesehen, die über einen Wählschalter 20 umschaltbar ist. In der mit vollen Linien dargestellten Lage des Wahlschalters 20 wird ein Stellglied 21 zur Drehzahlregelung des Motors M1 angewählt. Diese Regelung ist bevorzugt, da der Motor M1 der Schneckenwelle im Gehäuseabschnitt 1a (Dosierwellenabschnitt) im allgemeinen kleiner ausgebildet sein wird, als der die Schneckenwelle 2 des Gehäuseabschnitts 1c antreibende Motor M2, und da es oft erwünscht ist, die Schneckenwelle 2 mit einem bestimmten, unveränderten Durchsatzvolumen zu betreiben und daher deren Drehzahl unverändert zu lassen. In der strichliert dargestellten Mittellage des Schalters 20 ist eine Art Kaskadenregelung erzielt, bei der zunächst der Motor M1 geregelt wird und eine Regelung des Motors M2 erst dann erfolgt, wenn der Regelbereich für den Motor Ml nicht ausreicht. Durch Umschalten des Schalters 20 in die untere strichlierte Lage ist ferner eine Regelung ausschliesslich des Motors M2 für die Schneckenwelle 2 möglich.

Aufgrund des auf das Gegendruckglied 9 ausgeübten Konstantdruckes sind die an der Austrittsöffnung 8 austretenden Formlinge von hoher Dichte und weisen eine gute Formstabilität auf. Auf die nachgeschaltete Anwendung einer Pelletiermaschine kann daher verzichtet werden; werden die Formlinge dennoch in einer Pelletpresse nachbehandelt, ist das erzielte Endprodukt von noch höherer Güte.

Entsprechend der Erfindung ist vorgesehen, die Austrittsöffnung 8 nicht als Ringöffnung auszubilden, sondern in Umfangsrichtung in nebeneinander liegende Austrittskanäle 8a aufzuteilen. Hierzu ist an einem Flansch 31 der Gehäusestirnseite (Fig. 2) ein Haltering 23 angeschraubt, der einen inneren ringförmigen Verschleissteil 25 (Fig. 3, 4) hält, welcher zahnartige Vorsprünge 24 aufweist, die sich in Achsrichtung parallel zur Schneckenwelle 2 erstrecken. Zum Austausch der verschleissanfälligen Vorsprünge 24 ist das Verschleissteil 25 auswechselbar in dem Haltering 23 gehalten.

Zwischen die zahnartigen Vorsprünge 24 greifen Zähne 26 des Gegendruckgliedes 9, wodurch über den Umfang des Gegendruckgliedes 9 eine Vielzahl von Austrittskanälen 8a, gebildet ist, die vom ringförmigen Verschleissteil 25, dessen zahnartigen Vorsprüngen24, den Zähnen 26 und dem Rand des Gegendruckgliedes 9 begrenzt werden.

Da auch die Zähne 26 durch das austretende Material einem erhöhten Verschleiss unterworfen sind und um ihre Entfernbarkeit zu ermöglichen, sind sie auswechselbar angeordnet. Hierzu ist jeder Zahn 26 bzw. 26a (Fig. 6, 7) mit einem Haltevorsprung 27 versehen, der mit einem entsprechenden Vorsprung 28 einer auf das Gegendruckglied aufgeschraubten Halteplatte 29 zum Festhalten der Zähne 26 bzw. 26a zusammenwirkt. Auf diese Weise ist es leicht möglich, für den Betrieb als herkömmlicher Expander die Zähne 26a gänzlich zu entfernen. Es ist aber ebenso möglich, einzelne abgenutzte Zähne 26a leicht auszutauschen.

Die Zahnpaarung bildet über die axiale Länge der Vorsprünge 24 auch eine Verdrehsicherung für das Gegendruckglied 9. Wird das Gegendruckglied zu Reinigungszwecken od.dgl. vom Gehäuse 3 vollständig abgehoben, wie dies in Fig. 2 strichliert dargestellt ist, sind Führungssäulen 30 vorteilhaft.

Durch die Unterteilung der Ringaustrittsöffnung in eine Vielzahl von Austrittskanälen 8a ist eine Formgebung für das austretende Material bzw. die Formlinge möglich, die aufgrund der konstanten Gegenkraft auch eine gleichmässig hohe Dichte aufweisen. Um die aus den Kanälen 8a austretenden Formlinge zu Pellets abzuschneiden ist die dargestellte Ausführung erfindungsgemäss ausgestattet mit einem vor dem Gegendruckglied 9 angeordneten und von der Schneckenwelle 2 angetriebenen Messer 35 mit zwischen radialen Messerarmen liegenden Freiräumen, wobei das Messer etwa kreuz- oder sternförmig sein kann.

Bei der Zahnung gemäss den Fig. 2 und 3 ergeben sich im Querschnitt quadratische bzw. rechteckige Formlinge bzw. Pellets. Diese sind an den Kanten einer erhöhten Ausbruchsgefahr ausgesetzt, was immer dann von untergeordneter Bedeutung ist, wenn die Formlinge anschliessend weiterverarbeitet werden. Auch bei einer Weiterverarbeitung der Formlinge, z.B. in einer Pelletiermaschine, ist die durch das Auspressen des Materialgutes aus den Kanälen erzielte Volumenverminderung und hohe Kompaktheit vorteilhaft.

Sollen die Formlinge aber nach Austritt aus den Kanälen 8a als Endprodukt gehandelt werden, werden zur Verminderung der Kantenausbruchsgefahr die Zwischenbereiche zwischen den zahnartigen Vorsprüngen 24 und vorzugsweise auch die diesen Zwischenbereichen gegenüberliegenden Zähne 26a an ihren Begrenzungsflächen konkav ausgebildet. Somit sind alle Ecken des Kanals 8a gerundet. Zur Erzielung einer noch höheren Materialdichte kann es vorteilhaft sein, den Durchtrittsquerschnitt eines Kanals 8a zum Austritt hin zu vermindern; auf dem der Schneckenwelle zugewandten Ende ist der Kanal 8a mit einem vergrösserten Querschnitt ausgebildet, was durch entsprechende taschenförmige Ausnehmungen D (Fig. 6, 7) im Verschleissteil 25 und/oder im Gegendruckglied 9 erzielt ist.

Es kann vorteilhaft sein, auf dem dem Gegendruckglied zugewandten Ende der Schneckenwelle 2 ein Einstreichelement 32 anzuordnen, welches das Bearbeitungsgut zwangsweise in die Kanäle 8a hineinpresst. Dabei ist es zweckmässig, den Abstand des Einstreichelements 32 zu den Eintrittsöffnungen der Kanäle 8a einstellbar zu gestalten, weshalb die Schneckenwelle 2 in Pfeilrichtung P verschiebbar gelagert ist. Die Verstellung erfolgt mit Hilfe einer an sich bekannten Verstellvorrichtung.

Um einen gleichmässigen Materialdruck im Bereich des Gegendruckgliedes 9 zu erhalten, kann es zweckmässig sein, vor der Austrittsöffnung eine Kompressionszone auszubilden, was durch einen verengten Durchlassquerschnitt zwischen Schneckenwelle 2 und dem Gehäuse 3 und/oder verengte Schneckenwindungen möglich ist. Auch wäre zusätzlich oder alternativ die Anordnung eines kurzen Förderabschnittes (ähnlich dem Förderabschnitt f) nach den Knetwerkzeugen 6 und 7 vorteilhaft.

## Patentansprüche

1. Vorrichtung zum Auspressen von Bearbeitungsgut, mit einem zylindrischen Gehäuse (3) mit mindestens einer darin angeordneten Schneckenwelle (2),
wobei an die in Förderrichtung (F) vorne liegende Gehäusestirnseite ein Gegendruckglied (9) angrenzt,
und in Umfangsrichtung am Gehäuse (3) Vorsprünge (24) vorgesehen sind,
welche in Umfangsrichtung nebeneinander angeordnet sind und dabei mehrere in Umfangsrichtung nebeneinanderliegende, einen Durchtrittsquerschnitt bildende Austrittsöffnungen (8, 8a) für das Bearbeitungsgut begrenzen, dadurch gekennzeichnet, dass die Vorsprünge (24) am Gehäuse (3) als Verschleissteile auswechselbar vorgesehen sind und,
dass an der der Schneckenwelle (2) zugekehrten Seite ein von der Schneckenwelle (2) angetriebenes Messer (35) mit zwischen radialen Messerarmen liegenden Freiräumen dem Gegendruckglied (9) gegenüberliegt und
dass das Gegendruckglied (9) mit einem Stellkolben (10) einer Kolben/Zylindereinheit (11) verbunden ist, deren Arbeitsraum mit einem Druckspeicher (12) in Verbindung steht, wobei zwischen dem Arbeitsraum und dem Druckspeicher ein Reduzierventil (16) angeordnet ist und die Kolben/Zylindereinheit (11) hydraulisch betätigt ist, um das Gegendruckglied entgegen der Förderrichtung (F) mit einer in ihrer Grösse vorgebbaren und einstellbaren Kraft zu beaufschlagen, wobei die Kraft mit Hilfe des genannten Reduzierventiles 16 einstellbar ist.

2. Vorrichtung nach Anspruch 1, dadurch gekennzeichnet, dass am Gegendruckglied (9) Zähne (26) vorgesehen sind, welche in Umfangsrichtung neben den Vorsprüngen (24) des Gehäuses (3) angeordnet sind und dabei mehrere in Umfangsrichtung nebeneinanderliegende, einen Durchtrittsquerschnitt bildende Austrittsöffnungen (8a) für das Bearbeitungsgut begrenzen und, dass die Zähne auswechselbar vorgesehen sind.

3. Vorrichtung nach Anspruch 1 oder 2, dadurch gekennzeichnet, dass im Bereich der Austrittsöffnungen (8, 8a) im Gehäuse (3) ein Druckfühler (17) angeordnet ist, dessen Ausgangssignal in einem Regelkreis (18) zur Drehzahlregelung der Schneckenwelle 2 ausgewertet wird.

4. Vorrichtung nach Anspruch 1, dadurch gekennzeichnet, dass die Vorsprünge (24) am Gehäuse (3) an einem ringartigen Verschleissteil (25) angeordnet sind und sich parallel zur Schneckenwelle (2) als axiale Vorsprünge des Verschleissteiles (25) erstrecken.

5. Vorrichtung nach Anspruch 3, dadurch gekennzeichnet, dass die Ecken der Austrittsöffnungen (8a) gerundet sind.

## Claims

1. A device for pressing out process material, with a cylindrical housing (3) with at least one spiral shaft (2) disposed therein,
wherein a back pressure element (9) is seated closely against the end face of the housing which is at the front in the direction of transport (F),
and projections (24) are provided around the circumference on the housing (3),
which projections are disposed side by side around the circumference and thus define a plurality of discharge openings (8, 8a) for the process material lying side by side around the circumference and forming an entrance cross-section, characterised in that the projections (24) on the housing (3) are provided as replaceable wear parts and that a knife (35) driven by the spiral shaft (2) and with free spaces between radial knife arms is disposed opposite the back pressure element (9) on the side facing the spiral shaft (2), and that the back pressure element (9) is connected to an adjusting piston (10) of a piston-and-cylinder unit (11), the working space of which is connected to a pressure reservoir (12), wherein a reducing valve (16) is disposed between the working space and the pressure reservoir and the piston-and-cylinder unit (11) is hydraulically actuated so as to act on the back pressure element against the direction of transport (F) with a force, the magnitude of which can be predetermined and adjusted, wherein the force can be adjusted by means of the said reducing valve (16).

2. A device according to Claim 1, characterised in that teeth (26) are provided on the back pressure element (9), which teeth are disposed around the circumference close to the projections (24) on the housing (3) and thus define a plurality of discharge openings (8a) for the process material lying side by side around the circumference and forming an entrance cross-section, and that the teeth are provided so that they are replaceable.

3. A device according to Claims 1 or 2, characterised in that a pressure sensor (17) is disposed in the region of the discharge openings (8, 8a) in the housing (3), the output signal of which pressure sensor is utilised in a control circuit (18) for controlling the rotational speed of the spiral shaft (2).

4. A device according to Claim 1, characterised in that the projections (24) on the housing (3) are disposed on a ring-like wear part (25) and extend parallel to the spiral shaft (2) as axial projections of the wear part (25).

5. A device according to Claim 3, characterised in that the corners of the discharge openings (8a) are rounded.

## Revendications

1. Dispositif pour extruder un produit d'usinage, avec un carter cylindrique (3) comportant au moins un arbre à vis (2) disposé à l'intérieur, un organe à contre-pression (9) étant délimité sur la face frontale du carter situé à l'avant dans la direction de transport (F), des saillies (24) étant prévues en direction périphérique sur le carter (3), et délimitant pour le produit à usiner plusieurs ouvertures de sortie (8, 8a) disposées les unes à côté des autres en direction périphérique et formant une section transversale de passage, caractérisé en ce que les saillies (24) sont prévues sur le carter, à titre de pièces d'usure interchangeables et en ce que du côté, tourné vers l'arbre de vis (2), est placée, en face de l'organe à contre-pression (9), une lame (35), entraînée par l'arbre à vis (2) et comportant des espaces libres entre les bras de lames radiaux, et en ce que l'organe de contre-pression (9) est relié à un piston de réglage (10) d'un ensemble à pistons et cylindres (11), dont l'espace de travail est relié à un accumulateur de pression (12), une soupape de détente (16) étant disposée entre l'espace de travail et l'accumulateur de pression et l'ensemble à piston et cylindre (11) étant actionné de façon hydraulique, afin de solliciter l'organe à contre-pression, dans le sens inverse de la direction de transport (F), avec une force réglable, dont la valeur peut être prédéterminée, la force étant réglable à l'aide de la soupape de détente (16) citée.

2. Dispositif selon la revendication 1, caractérisé en ce que, sur l'organe à contre-pression (9), sont prévues des dents (26) disposées, en direction périphérique, a côté des saillies (24) du carter (3), et délimitant plusieurs sections de sortie (8a) disposées les unes à côté des autres dans la direction périphérique et formant une section transversale de passage pour le produit à travailler, de telle façon que les dents soient prévues de façon à pouvoir être changées.

3. Dispositif selon la revendication 1 ou 2, caractérisé en ce que, dans la zone des ouvertures de sortie (8, 8a) est prévue, dans le carter (3), une sonde de pression (17) dont le signal de sortie est exploité dans un circuit de régulation (18), en vue d'opérer la régulation de vitesse de rotation,de l'arbre de vis (2).

4. Dispositif selon la revendication 1, caractérisé en ce que les saillies (24) sont disposées sur le carter (3), sur une pièce d'usure (25) annulaire, et en s'étendant parallèlement à l'arbre de vis (2), sous forme de saillies axiales de la pièce d'usure (25).

5. Dispositif selon la revendication 3, caractérisé en ce que les angles des ouvertures de sortie (8a) sont arrondis
